# EUROPEAN PATENT APPLICATION

(11) **EP 1 681 134 A1**
(43) Date of publication of application: **19.07.2006**
(21) Application number: 06250174.7
(22) Date of filing: 13.01.2006
(51) Int. Cl.: B23Q 17/24

(54) **Device for generating guidance lines**

(30) Priority: 14.01.2005 GB 0500720
(71) Applicant: GMCA PTY Ltd, Victoria 3045 (AU)
(72) Inventor: Nicholson, Marcus, Pocklington York YO42 2QN (GB)
(74) Representative: Wood, Graham

(57) **Abstract**

The invention relates to a power tool provided to perform a cutting operation, said power tool having a base on which a work piece to be cut is placed, and a cutting unit on which a blade or grinding wheel is mounted for rotation. At least one guideline generating unit is provided which includes a light emitting means such as a laser to generate a guideline onto the work piece to allow the blade of the cutting unit to be aligned with the guideline, and the guideline generating unit emits a guideline light from a level which is the same as or below the plane of the top surface of the base. The guideline generating unit can be provided within the base or attached to the front or side of the same.

## Description

The invention to which this application relates is apparatus for the generation of a guide line or a plurality of guidelines on at least a portion of a workpiece so as to allow the cutting blade of a power tool to be set and guided by following the guideline(s) which are generated. -

The provision of guide lines which are generated from a light source, such as a laser, is well known. Typically, the line is generated from a unit which includes a power source, or a connection to a power source, the light source and the unit is mounted on the upper part of the body of the power tool so that the guide light shines down onto a workpiece and/or the base of the power tool.. The power tools with which this invention is particularly relevant are those which include a rotational blade powered by a motor. Typically the rotational blade and motor are provided as part of what is commonly referred to as a cutting unit. The cutting unit can then be pivotally movable with respect to a mount so as to allow the cutting blade to be brought from a raised position above the workpiece to a lowered position in which the cutting blade operates to cut through the workpiece to perform the cutting action. The mount for the cutting unit is typically provided in contact with a base which has a top surface which defines the support surface for the workpiece and a slot through which part of the blade can pass when the cutting unit is moved down to the cutting position so as to ensure that the blade passes through the workpiece and hence cuts through the workpiece. Different configurations of the power tool concept can be provided to suit the cutting of particular workpieces such as, for example, wood, metal or the like and for particular requirements but in each case, the principle is generally the same. With regard to the positioning of the guideline generating unit, this is in one form provided on the cutting unit so as to be pivotally movable along with the cutting unit and thereby shine a guide light down onto the top surface of the workpiece or, alternatively, can be located on the mount to the rear of the cutting blade and therefore allow a light to be shone from the rear of the workpiece and across the top surface of the same. Both of these systems are known to be effective in use but, can be prone to vibration as the same are mounted close to the cutting unit and/or the guideline can be masked by debris from the cutting operation performed on the workpiece. Furthermore, the guideline generation units are susceptible to damage either by knocking by the workpiece when positioning the same and/or by the user.

The aim of the present invention is to provide a power tool with a rotational blade as part of a cutting unit mounted to be movable with respect to a base and to provide a guideline generating unit which is positioned with respect to the power tool so as to provide an effective and usable guideline and at the same time, be more robust and less susceptible to damage.

In the first aspect of the invention, there is provided a power tool, a guideline generating unit provided on the power tool for generating a guideline onto at least a portion of a workpiece on which a cutting operation is to be performed, said power tool including a blade or grinding wheel which is driven to be rotatable as part of a cutting unit, said cutting unit provided attached to a base, said base having a top surface for location of the workpiece thereon during the cutting operation and wherein the guideline generating unit is mounted on or adjacent to the base of the power tool such that the guideline light generated from the unit passes in a direction towards the workpiece above the top surface of the base so as to generate a guideline on at least a portion of the workpiece when positioned on the base.

In one embodiment, the base includes an aperture which allows the passage of the light therethrough and above the base top surface with the guideline generating unit positioned underneath the top surface of the base or within the base.

In one embodiment the aperture is the slot provided to receive a portion of the cutting blade or grinding wheel during the cutting operation.

In another embodiment, the light which is generated passes through an aperture which is separate to the slot.

In one embodiment, the guideline generating unit includes a laser device and the guideline is generated by the laser. In one embodiment, the generating unit allows for the generation of two guidelines, said guidelines selectively adjustable and positionable so as to allow the generation of guidelines onto the workpiece with, for example, a guideline lying to either side of the blade when the blade is brought into the cutting position on the said workpiece.

In one embodiment, the guideline generating unit is in a position below the top surface of the base so that the same is masked from contact with any item on the top surface of the base. This therefore prevents or minimises the risk of damage to the light generating unit by the positioning of a workpiece on the base.

Typically, the light emitting means such as a laser unit, in the guideline generating unit, is angled with respect to the position at which the cutting operation is performed on the workpiece, such that the guideline is generated on at least the surface of the workpiece facing to the front of the power tool when in use. This therefore means that the guideline is at least generated on the face of the workpiece which faces the user of the power tool when they are moving the cutting unit into a cutting operation and thereby ensures that the user can view the guideline and use it to line up the blade with the guideline, both being visible to the user.

In one embodiment, the guideline generating unit is provided as an integral part of the power tool or, alternatively, can be fitted as a retrofit arrangement on a power tool.

The provision of the guideline generating unit in accordance with the invention thereby allows the generation of a guideline in a position on the workpiece which is usable by the user and provides the required reference. Furthermore, the positioning of the guideline generating unit allows access to the top surface of the base without masking the guideline which is generated and also removes the guideline generating unit from the risk of damage from contact with the workpiece, with the user, or with debris such as sparks from the cutting operation. Furthermore, the provision of the guideline generating unit on, within or under the base reduces the risk of vibration affecting the operation of the guideline generating unit.

In one embodiment, it is preferred that the guideline generating unit is located at the front of the base and an operation switch is provided on the base and said switch may also be protected so as to avoid the risk of melting and or other debris from the cutting operation.

In a further aspect of the invention there is provided a power tool, said power tool having a blade driven by a motor for performing a cutting action on a workpiece mounted on a base of the tool, and said tool includes a guideline generating unit, for generating a guideline on and adjacent to the workpiece and wherein the guideline generating unit is positioned with respect to the power tool such that the guideline is emitted from a location at the same level as or below the phase of the top surface of the power tool base.

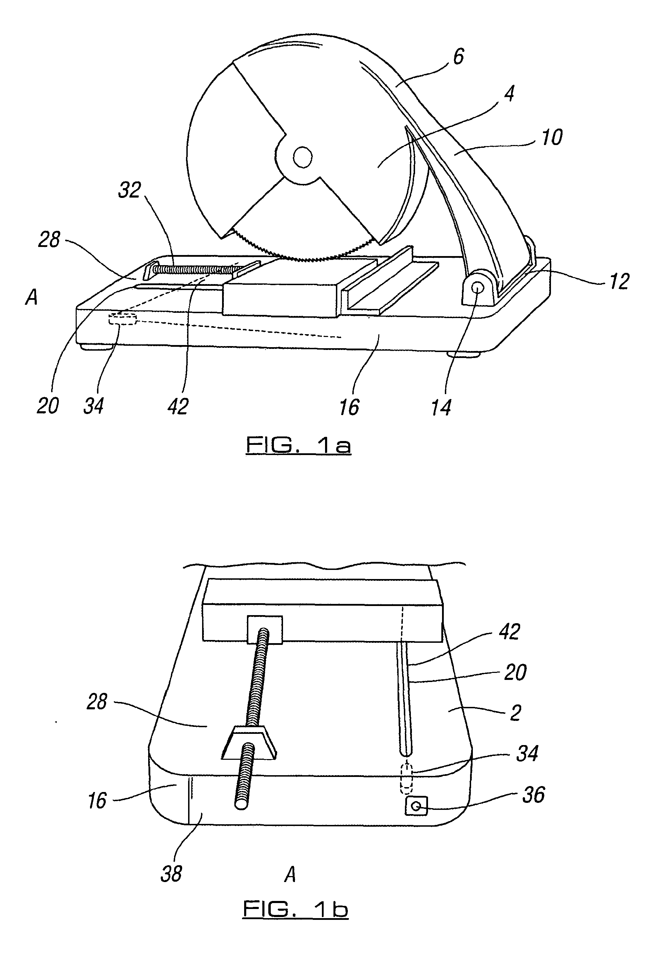

Specific embodiments of the invention are now described with reference to the accompanying drawings, wherein:-
Figures 1a and b illustrate a light generating unit location and operation in accordance with one embodiment of the invention;
Figures 2a to c illustrate the generation of a guideline from a light generating unit in accordance with the invention;
Figure 3 illustrates the arrangement of the light generating unit in accordance with one embodiment of the invention; and
Figures 4a and b illustrate operation of the light generating during a cutting operation.

Referring now to the figures, there is illustrated a power tool 2, having a cutting blade 4 which can be a grinding wheel or toothed wheel provided within a shield 6 and driven to be rotatable by a motor (not shown).

The blade and guard are provided as part of a cutting unit 10 the rear of which is mounted to be pivotable on a mount 12 about pivot location 14. The mount 12 is provided on a base 16.

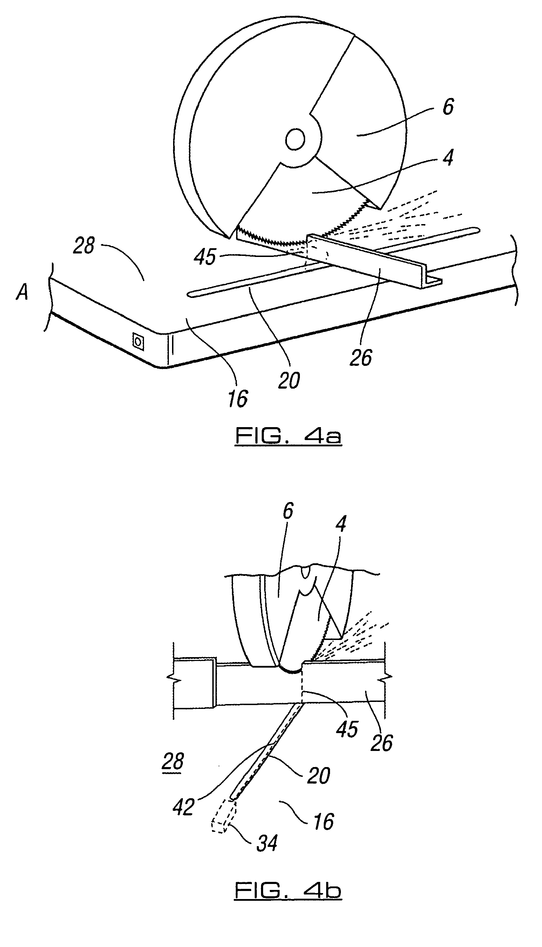

The cutting unit is provided to be pivotably movable between a raised position as shown in Figure 3 and a lowered cutting position as shown in Figures 4a and 4b, by the user, who typically stands at the front of the tool at location A with respect to the power tool, performing a pulling down operation on the cutting unit. The base is provided with an aperture in the form of slot 20 which is provided in line with the cutting blade 4 such that when the blade is brought to the lowered position, the bottom portion of the blade can be received into the slot thereby ensuring that the cutting operation is performed wholly through a workpiece 26 located on the top surface 28 of the base.

The workpiece can be of any form to which the power tool is particularly suited. In the examples, the workpiece is formed of metal, in the form of metal angle or metal tube. In order to perform the cutting operation the blade is brought down into contact with the workpiece in a position towards the top surface of the base as shown with the blade rotating and therefore performs the cutting operation to cut through the workpiece as shown in Figures 4a and 4b. Typically, a vice 32 is provided to locate the workpiece in the required position.

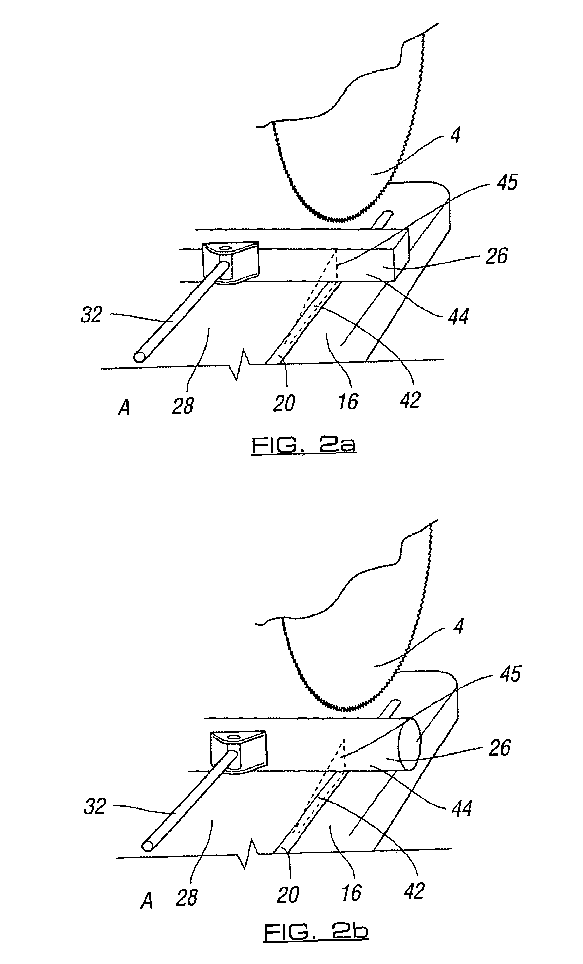

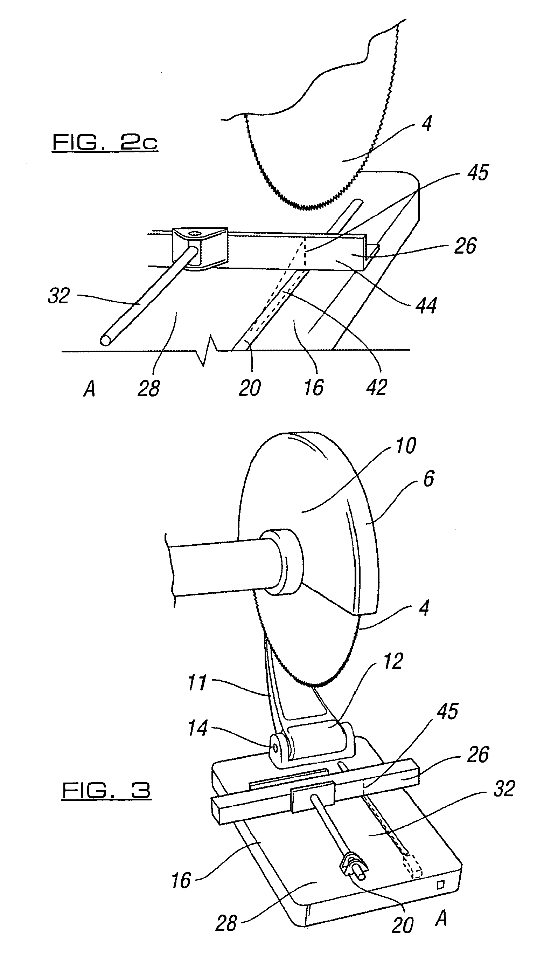

The guideline generating unit 34 in accordance with the invention, is located on the underside of the top surface 28 of the base. Switching means 36 for operation of the guideline generating unit 34 can be provided, as in this case, shown on the front wall 38 adjacent location A so as to be easily actuable by the user when operating the power tool. When the guideline generating unit is switched on, a laser unit provided within the light generating unit, is activated and emits a guideline light along a plane 42. As the guideline generating unit 34 is aligned in this case with the slot 20, so the light, in the plane 42, passes through the slot 20 and upwardly towards the workpiece 26 as a result of the angling of the guideline generating unit such that all or at least a portion of the light emits through the slot onto and above the plane of the top surface 38 of the base and hence forms a guideline 45 at least on the front surface 44 of the workpiece 26 as is illustrated in Figures 2a to c and Figure 3.

This guideline when produced on the workpiece, allows the setting of the blade with the desired location on the workpiece where the cut is to occur. Once the user is satisfied that the workpiece has been set correctly the blade and cutting unit can be lowered with a final check being made that the blade is in line with the guideline or guidelines emitted onto the workpiece. If this is the case, then the cutting unit can be lowered further to perform the cutting operation as illustrated in Figures 4a and b.

Figures 4a and b also illustrate how, with metal, a large number of sparks can be emitted when cutting metal which are often hot and could possibly melt the guideline generating unit. However as the guideline generating unit is provided under the base then the same is masked from exposure to the sparks and hence the risk of melting of the guideline generating unit due to the sparks, is minimised. Furthermore, as the guideline generating unit operates during the cutting operation, the guideline can still be produced on the workpiece even as the cutting operation occurs.

It should be appreciated that in this description, while reference has been made to a single guideline, it is possible that the guideline generating unit can be provided to emit two side by side guidelines or a split guideline so as to generate two side by side guidelines on the workpiece. Typically, in this arrangement, one guideline will lie under or to one side of the blade and the other guideline will lie to the other side of the blade when the blade is brought into contact with the workpiece.

## Claims

1. A power tool, a guideline generating unit provided on the power tool for generating a guideline onto at least a portion of a work piece on which a cutting operation is to be performed, said power tool including a blade or grinding wheel which is driven to be rotatable as part of a cutting unit, said cutting unit provided attached to a base, said base having a top surface for location of the work piece thereon during the cutting operation and wherein the guideline generating unit is mounted on or adjacent to the base of the power tool such that the guideline light generated from the unit passes in a direction towards the work piece above the top surface of the base so as to generate a guideline on at least a portion of the work piece when positioned on the base.

2. A power tool according to claim 1 wherein the guideline generating unit is mounted to be below the plane of the top surface of the base.

3. Apparatus according to claim 1 wherein the base includes an aperture which allows the passage of the guideline light therethrough.

4. Apparatus according to claim 3 wherein the aperture is a slot provided to receive a portion of the cutting blade or grinding wheel during the cutting operation.

5. Apparatus according to claim 3 wherein the aperture is provided separate to a slot which is provided on the base to receive a portion of the cutting blade or grinding wheel during the cutting operation.

6. Apparatus according to claim 1 wherein the guideline generating unit includes a laser device to generate a laser guideline light.

7. Apparatus according to claim 1 wherein the guideline generating unit allows for the generation of two guidelines side by side.

8. Apparatus according to claim 7 wherein said guidelines are selectively adjustable and positionable so as to allow the generation of guidelines onto the work piece with at least one of the guidelines lying to one side of the blade when the blade is brought into the cutting position on said work piece.

9. Apparatus according to claim 1 wherein the guideline generating unit is position so as not to contact any work piece placed on the top surface of the base.

10. Apparatus according to claim 1 wherein the guideline generating unit is positioned with respect to the position in which the cutting operation is performed on the work piece such that the guideline light is directed to form a guideline on at least the surface of the work piece facing to the front of the base.

11. Apparatus according to claim 10 wherein the guideline is generated on a substantially vertical face of the work piece which is viewable by the user of the power tool when they are moving the cutting head into a cutting operation.

12. Apparatus according to claim 1 wherein the cutting head is pivotable between a raised and a lowered cutting position.

13. Apparatus according to claim 12 wherein the cutting head is pivotable to one or both sides of a vertical plane.

14. Apparatus according to claim 1 wherein the guideline generating unit is provided as an integral part of the power tool.

15. Apparatus according to claim 1 wherein the guideline generating unit can be retrofitted to a power tool.

16. Apparatus according to claim 1 wherein the guideline generating means is located at the front of the base.

17. Apparatus according to claim 1 wherein a switch for operation of the guideline generating unit is provided on the base.

18. A power tool, said power tool having a blade driven by a motor for performing a cutting action on a work piece mounted on a base of the tool, said tool including a guideline generating unit for generating a guideline on and adjacent to the work piece and wherein the guideline generating unit is positioned with respect to the power tool such that the guideline is emitted from a location at the same level as or below the plane of the top surface of the base.
